# EUROPEAN PATENT APPLICATION

(11) **EP 4 332 381 A1**
(43) Date of publication of application: **06.03.2024**
(21) Application number: 22192714.8
(22) Date of filing: 30.08.2022
(51) Int. Cl.: F04D 11/00, F04D 17/12, H01M 8/04746

(54) **COMPRESSOR AND MULTI STACK FUEL CELL**

(71) Applicant: KNORR-BREMSE Systeme für Nutzfahrzeuge GmbH, 80809 München (DE)
(72) Inventor: FELDT, Thomas, 85435 Erding (DE); COMPERA, Yves, 85748 Garching bei München (DE); THEIL, Robert, 82299 Türkenfeld (DE)

(57) **Abstract**

The invention relates to a compressor and a multi stack fuel cell and in particular relates to a compressor and a multi stack fuel cell with adjustable pressurized fluid inputs. Disclosed is a compressor comprising a first compressor stage that is configured to take in an intake fluid, compress the intake fluid to a compressed fluid and output the compressed fluid as an output fluid at a first pressure, a second compressor stage that is configured to take in an intake fluid, compress the intake fluid to a compressed fluid and output the compressed fluid as an output fluid at a second pressure.

## Description

The invention relates to a compressor and a multi stack fuel cell and in particular relates to a compressor and a multi stack fuel cell with adjustable pressurized fluid inputs.

In the automotive domain applications are known that need a fluid supply, in particular an air supply, whereas slightly different pressures are required for most energy efficient and lifetime optimal operation. In particular, in multi stack fuel cell systems (MFC), even if the individual stacks have the same specification, the behavior of each stack can differ slightly, e.g. due to different rates of degradation or production tolerances. This can result in different demands for air supply conditions (pressure, mass flow, humidity) for reaching best efficiency or lifetime for each individual stack.

In the related art, two different procedures are known to supply the individual fuel cell stack with air.

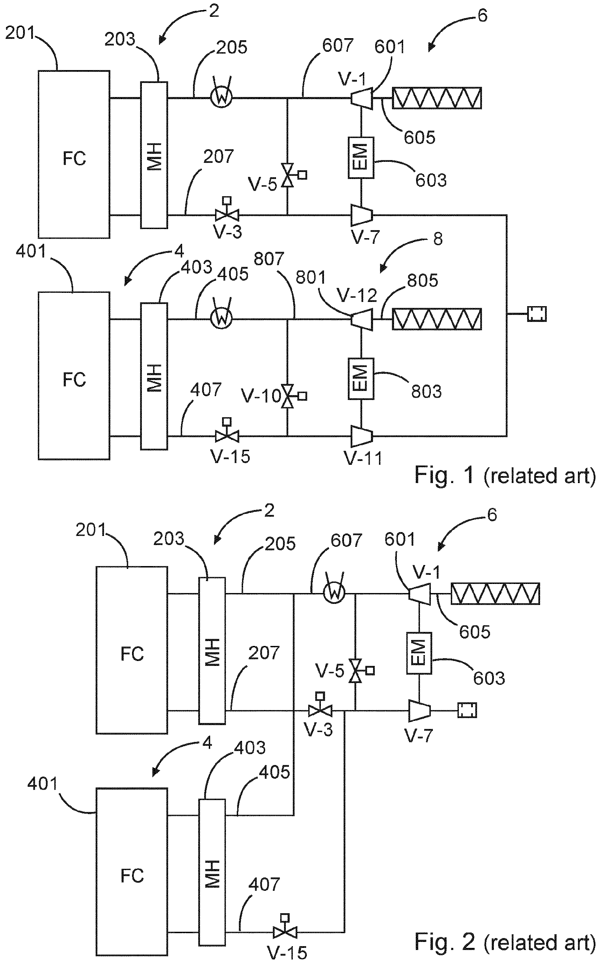

As it can be seen in Fig. 1, a first stack 2 of a fuel cell comprises a first fuel cell 201 and a first membrane humidifier 203. Via a first fuel cell fluid intake 205 compressed ambient air of a first pressure is supplied to the first stack 2 to the membrane humidifier 203. In the membrane humidifier 203, the compressed air is properly humidified and then supplied to the fuel cell 201. In the fuel cell, oxygen contained in the compressed air reacts with H2 supplied from a H2 reservoir (not shown), e.g. a metal hydride storage or a compressed gaseous hydrogen storage such that electrical energy is generated. Via a first fuel cell fluid output 207, the compressed air and generated water is released from the fuel cell stack 2.

A second stack 4 of a fuel cell is configured identically to the first stack 2 and comprises a second fuel cell 401, a second membrane humidifier 403, a second fuel cell fluid input 405 and a second fuel cell fluid output 407.

A first compressor 6 comprises a first electrical motor 603 as a driving force that drives a first compressor stage 601, e.g. a radial air compressor. Via a first compressor intake 605, intake fluid like ambient air is supplied to the first compressor stage 601, compressed to a compressed fluid and output as output fluid via a first compressor output 607. The first compressor output 607 is connected to the first fuel cell input 205 such that the compressed fluid is supplied to the first fuel cell intake 205.

A second compressor 8 is configured identically to the first compressor 6 and comprises a second electrical motor 803, a second compressor stage 801, a second compressor intake 805 and a second compressor output 807, whereas the second compressor output 807 is connected to the second fuel cell input 405 such that the compressed fluid is supplied to the second fuel cell intake 405.

In this configuration, having two independent compressors 6, 8, each stack of a fuel cell can be individually provided with an adjusted amount of pressurized air. However, this solution is expensive since it requires two completely independent compressors.

As it can be seen in Fig. 2, a first stack 2 and a second stack 4 of fuel cells are provided that are identical to those in Fig. 1. However, only one compressor 6 is provided, that is identical to the first compressor 6 of Fig. 1 with the alteration, that the first compressor output 607 is connected to the first fuel cell intake 205 and the second fuel cell intake 405.

In this configuration, having one common compressor 6, the system complexity is significantly reduced. However, both fuel cell stacks 2, 4 are provided with the same pressurized ambient air prohibiting an energy efficient and lifetime optimal operation.

The invention seeks to solve the problems of the related art and to provide a compressor and a multi stack fuel cell that allows for energy efficient and lifetime optimal operation while maintaining a low system complexity.

The object is solved by the subject-matter of the independent claims. Further developments are subject-matter of the dependent claims.

Disclosed is a compressor comprising a first compressor stage that is configured to take in an intake fluid, compress the intake fluid to a compressed fluid and output the compressed fluid as an output fluid at a first pressure, a second compressor stage that is configured to take in an intake fluid, compress the intake fluid to a compressed fluid and output the compressed fluid as an output fluid at a second pressure.

Advantageously, the compressor comprises a common driving source that is configured to drive the first compressor stage and the second compressor stage.

Advantageously, the first compressor stage comprises a first adjusting means that is configured to adjust the first pressure or the second compressor stage comprises a second adjusting means that is configured to adjust the second pressure.

Advantageously, the first adjusting means or the second adjusting means are adapted to adjust the first pressure independently from the second pressure or the second pressure independently from the first pressure.

Advantageously, the common driving source is configured to provide a rotational input to the first compressor stage and the second compressor stage and the first compressor stage and the second compressor stage are rotational compressor stages.

Advantageously, the compressor is configured such that first compressor stage and the second compressor stage are driven by a common shaft of the common driving source such that the first compressor stage and the second compressor stage rotate at the same rotational velocity.

Advantageously, the first compressor stage is a swash plate compressor and the first adjusting means is a swash plate, or the second compressor stage is a swash plate compressor and the second adjusting means is a swash plate.

Advantageously, the first compressor is a radial compressor or the second compressor is a radial compressor.

Advantageously, the first adjusting means or the second adjusting means is a fluid dynamic influencing mechanism, in particular a variable nozzle, an internal bypass preferably bypassing fluid from an inlet to an outlet of the compressor stage.

Advantageously, the compressor comprises an expander turbine that is mounted to the common shaft, the expander being configured for energy recuperation.

Advantageously, the compressor comprises at least a third compressor stage that is configured to take in an intake fluid, compress the intake fluid to a compressed fluid and output the compressed fluid as an output fluid at a third pressure.

Advantageously, the third compressor stage comprises a third adjusting means that is configured to adjust the third pressure independently from the first pressure or the second pressure such that the third pressure may be equal to the first pressure or the second pressure or may be different from the first pressure or the second pressure.

Disclosed is a multi stack fuel cell comprising the compressor according to any of the previous compressor claims, a first fuel cell having a first pressure input that is connected to the first compressor stage such that the output fluid of the first compressor stage is fed to the first fuel cell, and, a second fuel cell having a second pressure input that is connected to the second compressor stage such that the output fluid of the second compressor stage is fed to the second fuel cell.

In the following, the invention is explained by means of embodiments and the figures.
**Figure 1** exhibits a multi stack fuel cell known from the related art.
**Figure 2** exhibits a further multi stack fuel cell known from the related art.
**Figure 3** exhibits a schematic view of a multi stack fuel cell according to an embodiment of the invention.
**Figure 4** exhibits a schematic view of a compressor according to the embodiment of the invention.
**Figure 5** exhibits a detailed view of a compressor stage according to the embodiment of the invention.

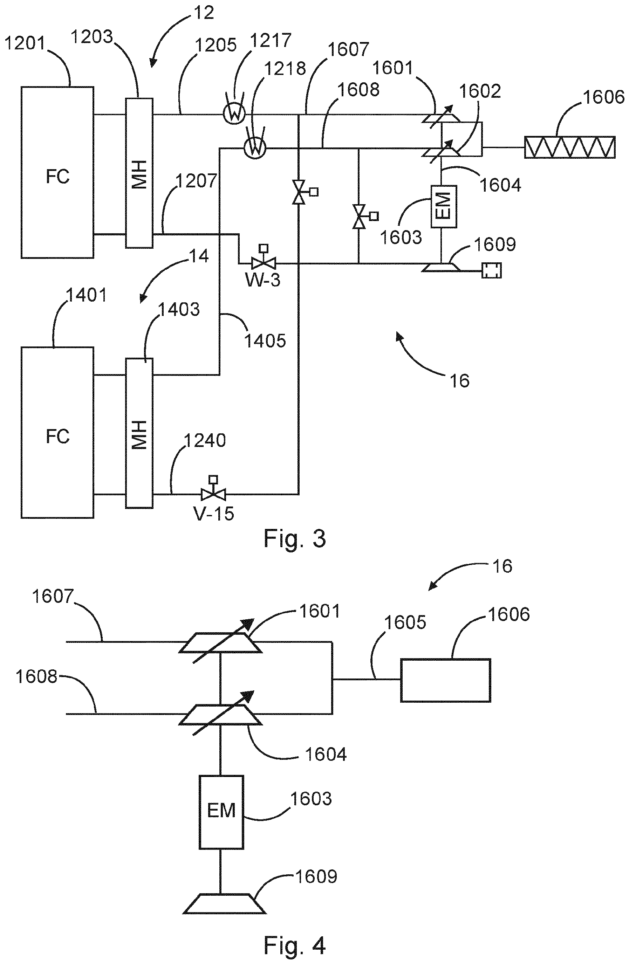

**Fig. 3** exhibits a multi stack fuel cell 11 according to the invention.

A first stack 12 of a fuel cell comprises a first fuel cell 1201 and a first membrane humidifier 1203. Via a first fuel cell fluid intake 1205 compressed ambient air of a first pressure is supplied to the first stack 12 to the membrane humidifier 1203. In the membrane humidifier 1203, the compressed air is properly humidified and then supplied to the fuel cell 1201. In the fuel cell, oxygen contained in the compressed air reacts with H2 supplied from a H2 reservoir (not shown), e.g. a metal hydride storage such that electrical energy is generated. Via a first fuel cell fluid output 1207, the compressed air and generated water is released from the fuel cell stack 12.

A second stack 14 of a fuel cell comprises a second fuel cell 1401 and a second membrane humidifier 1403. Via a second fuel cell fluid intake 1405 compressed ambient air of a second pressure is supplied to the second stack 14 to the membrane humidifier 1403. In the membrane humidifier 1403, the compressed air is properly humidified and then supplied to the second fuel cell 1401. In the fuel cell, oxygen contained in the compressed air reacts with H2 supplied from a H2 reservoir (not shown), e.g. a metal hydride storage such that electrical energy is generated. Via a second fuel cell fluid output 1407, the compressed air and generated water is released from the fuel cell stack 14.

By means of Fig. 3 and Fig. 4, a compressor 16 of the embodiment is described. The compressor 16 comprises an electric motor 1603 having a shaft 1604. The shaft 1604 is connected to a first rotator of a first radial compressor stage 1601 and a second rotator of a second radial compressor stage 1602.

The first radial compressor stage 1601 comprises a first compressor intake 1605. Via an air filter 1606 ambient air is cleaned and supplied to the first compressor stage 1601 as compressor intake fluid, in particular compressor intake ambient air. In the first compressor stage, the compressor intake ambient air is compressed and released as a compressor output fluid via a first compressor output 1607. The first compressor stage is a fixed compressor that is configured such that the amount of conveyed fluid is directly proportional to the rotational speed of the first rotator of the first compressor stage 1601 and thus is directly proportional to the rotational speed of the electric motor 1603. Thus, the compressor output fluid is releases with a first pressure.

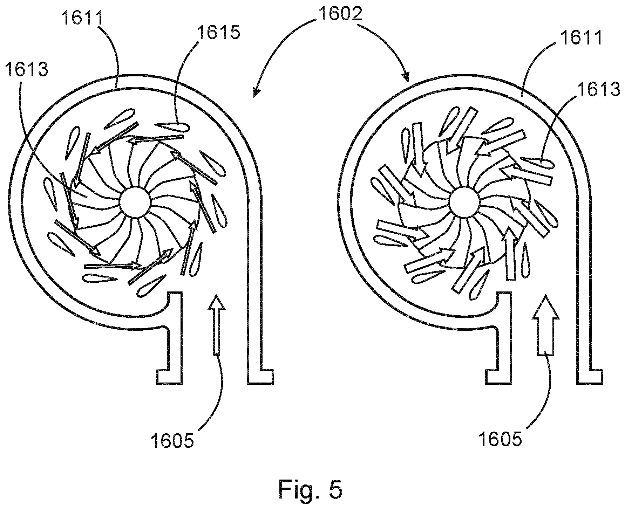

The second radial compressor stage 1602 comprises a second compressor intake 1605. Via the air filter 1606 ambient air is cleaned and supplied to the second compressor stage 1602 as compressor intake fluid, in particular compressor intake ambient air. In the second compressor stage 1602, the compressor intake ambient air is compressed and released as a compressor output fluid via a second compressor output 1608. The second compressor stage 1602 is a variable compressor that is configured such that the amount of conveyed fluid is proportional to the rotational speed of the second rotator of the second compressor stage 1602 and its configuration as will be explained later by means of Fig. 5. Thus, the compressed output fluid is released from the second compressor output 1608 with a second pressure that may be adjusted and may thus deviate from the first pressure.

As it can be taken from Fig. 3 or Fig. 4, at the other end of the shaft 1604 opposite to the location of the first compressor stage 1601 and the second compressor stage 1602, there may be arranged an expander turbine 1609 for recuperation. The expander turbine 1602 may be driven by outlet fluid coming from one or both of the fuel cell stacks to preserve energy and reduce the energy required for driving the electric motor 1603.

By means Fig. 5, the second compressor stage 1602 is described in more detail. A case 1611 comprises the second rotator as a turbine blade 1613. Via the second compressor intake 1605, intake compressor ambient air is supplied to the second compressor stage 1602. By rotation of the turbine blade 1613, the intake compressor ambient air is compressed and passes variable valve nozzles 1615 as a second adjustor means. The variable valve nozzles 1615 are adjustable to form a narrow nozzle or an open nozzle and according to configuration increase or decrease the amount of conveyed fluid. This allows for adjusting the second pressure such that it may deviate from the first pressure.

As it can be taken from Fig. 3, the output air released at the first compressor output 1607 and the second compressor output 1608 are fed to the first fuel cell fluid intake 1205 and the second fuel cell fluid intake 1405. Via a first heat exchange 1617 and a second heat exchange 1618, the compressed compressor output fluid is adjusted in temperature, since the residual heat remaining from the compression may damage the fuel cell's membrane and must be dissipated.

By the adjustability of the second compressor stage 1602, the second output pressure may be different from the first output pressure. Thus, the first fuel cell stack 12 and the second fuel cell stack 14 may operate at optimal fluid pressure and optimal efficiency.

The invention was described by means of an embodiment. The embodiment is only of explanatory nature and does not restrict the invention as defined by the claims. As recognizable by the skilled person, deviations from the embodiment are possible without leaving the invention that is defined according to the scope of the claimed subject-matter.

For example, a variable second compressor stage, a radial air compressor having variable nozzles were described. However, also a variable swash plate compressor may be employed having the variable swash plate as a second adjusting means.

For example, the second compressor stage was described as variable compressor stage. Alternatively, also the first compressor stage may be the variable compressor stage or both compressor stages may be variable compressor stages.

For example, the compressor 16 was describe as compressor for fuel cells. The compressor may also be used for any kind of situations that require compression of fluids with different compression levels. Such situations or applications i.a. may be heat pumps or industrial applications like pneumatic machines.

In this document, the terms "and", "or" and "either... or" are used as conjunctions in a meaning similar to the logical conjunctions "AND", "OR" (often also "and/or") or "XOR", respectively. In particular, in contrast to "either... or", the term "or" also includes occurrence of both operands.

Method steps indicated in the description or the claims only serve an enumerative purpose of the method steps. They only imply a given sequence or an order where their sequence or order is explicitly expressed or is - obvious for the skilled person - mandatory due to their nature. In particular, the listing of method steps do not imply that this listing is exhaustive. Also, not all method steps described in an embodiment are required to implement the invention. The required method steps are defined by the claims only.

In the claims, the word "comprising" does not exclude other elements or steps, and the indefinite article "a" or "an" does not exclude a plurality and has to be understood as "at least one".

### LIST OF REFERENCE SIGNS

- 2: first stack of a fuel cell
- 201: first fuel cell
- 203: first membrane humidifier
- 205: first fuel cell fluid intake
- 207: first fuel cell fluid output
- 4: second stack of a fuel cell
- 401: second fuel cell
- 403: second membrane humidifier
- 405: second fuel cell fluid intake
- 407: second fuel cell fluid output
- 6: first compressor
- 601: first compressor stage
- 603: first electric motor
- 605: first compressor intake
- 607: first compressor output
- 8: second compressor
- 801: second compressor stage
- 803: second electric motor
- 805: second compressor intake
- 807: second compressor output
- 12: first stack of a fuel cell
- 1201: first fuel cell
- 1203: first membrane humidifier
- 1205: first fuel cell fluid intake
- 1207: first fuel cell fluid output
- 14: second stack of a fuel cell
- 1401: second fuel cell
- 1403: second membrane humidifier
- 1405: second fuel cell fluid intake
- 1407: second fuel cell fluid output
- 16: compressor
- 1601: first compressor stage
- 1602: second compressor stage
- 1603: electric motor
- 1605: first/second compressor intake
- 1606: air filter
- 1607: first compressor output
- 1608: second compressor output
- 1609: expander turbine
- 1611: second compressor stage case
- 1613: second rotator/second turbine blade
- 1615: variable valve nozzles
- 1617: first heat exchange
- 1618: second heat exchange

## Claims

1. A compressor comprising
a first compressor stage that is configured to take in an intake fluid, compress the intake fluid to a compressed fluid and output the compressed fluid as an output fluid at a first pressure,
a second compressor stage that is configured to take in an intake fluid, compress the intake fluid to a compressed fluid and output the compressed fluid as an output fluid at a second pressure.

2. The compressor according to claim 1 wherein
the compressor comprises a common driving source that is configured to drive the first compressor stage and the second compressor stage.

3. The compressor according to any of the previous claims, wherein
the first compressor stage comprises a first adjusting means that is configured to adjust the first pressure or
the second compressor stage comprises a second adjusting means that is configured to adjust the second pressure.

4. The compressor according to claim 3, wherein the first adjusting means or the second adjusting means are adapted to adjust the first pressure independently from the second pressure or the second pressure independently from the first pressure.

5. The compressor according to any of the previous claims, wherein
the common driving source is configured to provide a rotational input to the first compressor stage and the second compressor stage and
the first compressor stage and the second compressor stage are rotational compressor stages.

6. The compressor according to claim 5, wherein the compressor is configured such that first compressor stage and the second compressor stage are driven by a common shaft of the common driving source such that the first compressor stage and the second compressor stage rotate at the same rotational velocity.

7. The compressor according to the previous claims, wherein
the first compressor stage is a swash plate compressor and the first adjusting means is a swash plate, or
the second compressor stage is a swash plate compressor and the second adjusting means is a swash plate.

8. The compressor according to any of claims 5 to 7, wherein
the first compressor is a radial compressor or
the second compressor is a radial compressor.

9. The compressor according to any of claims 3 to 8, wherein the first adjusting means or the second adjusting means is a fluid dynamic influencing mechanism, in particular a variable nozzle or an internal bypass preferably bypassing fluid from an inlet to an outlet of the compressor stage.

10. The compressor according to any of claims 6 to 9, wherein
the compressor comprises an expander turbine that is mounted to the common shaft, the expander turbine being configured for energy recuperation.

11. The compressor according to any of the previous claims, wherein
the compressor comprises at least one third compressor stage that is configured to take in an intake fluid, compress the intake fluid to a compressed fluid and output the compressed fluid as an output fluid at a third pressure.

12. The compressor according to claim 11, wherein
the third compressor stage comprises a third adjusting means that is configured to adjust the third pressure independently from the first pressure or the second pressure such that the third pressure may be equal to the first pressure or the second pressure or may be different from the first pressure or the second pressure.

13. A multi stack fuel cell comprising
the compressor according to any of the previous compressor claims,
a first fuel cell stack having a first pressure input that is connected to the first compressor stage such that the output fluid of the first compressor stage is fed to the first fuel cell, and,
a second fuel cell stack having a second pressure input that is connected to the second compressor stage such that the output fluid of the second compressor stage is fed to the second fuel cell.
